Europäisches Patentamt

(19) European Patent Office

Office européen des brevets

(11) Veröffentlichungsnummer: **0 096 361**
**B1**

(12) **EUROPÄISCHE PATENTSCHRIFT**

(45) Veröffentlichungstag der Patentschrift:
05.02.86

(51) Int. Cl.⁴: **F 16 D 65/20**

(21) Anmeldenummer: 83105449.9

(22) Anmeldetag: 01.06.83

(54) Bremsbelagbaugruppe.

(30) Priorität: 04.06.82 DE 3221208

(43) Veröffentlichungstag der Anmeldung:
21.12.83 Patentblatt 83/51

(45) Bekanntmachung des Hinweises auf die Patenterteilung:
05.02.86 Patentblatt 86/6

(84) Benannte Vertragsstaaten:
DE FR GB IT SE

(56) Entgegenhaltungen:
DE - A - 2 722 194
DE - U - 1 984 393
FR - A - 2 435 630
US - A - 2 801 714

(73) Patentinhaber: LUCAS INDUSTRIES public limited company, Great King Street, Birmingham, B19 2XF West Midlands (GB)

(72) Erfinder: Hönick, Hans H., Ringstrasse 125, D-5400 Koblenz (DE)

(74) Vertreter: Wuesthoff, Franz, Dr.-Ing. et al, Patentanwälte Wuesthoff -v. Pechmann-Behrens-Goetz Schweigerstrasse 2, D-8000 München 90 (DE)

## Beschreibung

Die Erfindung betrifft eine Bremsbelagbaugruppe, insbe- sondere für Scheibenbremsen, mit
- einem kolbenartigen Bremsbelag,
- einer wärmeisolierenden Umhüllung, die an einer Man- telfläche des Bremsbelages anliegt und sie im Einbauzustand von einer Zylinderwand eines Betätigungszylinders trennt,
- und einem Betätigungskolben, der an der Rückseite des Bremsbelages anliegt.

Bei Bremsbelagbaugruppen dieser Gattung ist nicht nur der Betätigungskolben, sondern auch der Bremsbelag an der Zylinderwand des zugehörigen Betätigungszylinders geführt; gesonderte Führungsflächen für den Bremsbelag sind somit nicht erforderlich. Bei zunehmendem Verschleiß des Bremsbelages wird der Betätigungskolben allmählich in den zuvor vom Bremsbelag eingenommenen Abschnitt des Betätigungszylinders vorgeschoben und bleibt dabei ständig auf der gesamten Kolbenlänge an der Zylinderwand geführt. Dies ist ein wesentlicher vorteil gattungsgemäßer Bremsbelagbaugruppen gegenüber anderen bekannten Anordnungen, bei denen ein Betätigungskolben auf einen ausschließlich außerhalb des zugehörigen Betätigungszylinders angeordneten Bremsbeslag einwirkt und bei zunehmendem Belagverschleiß teilweise aus dem Betätigungszylinder herausgeschoben wird, was voraussetzt, daß der Kolben so lang gestaltet ist, daß er auch bei vollständig verschlissenem Bremsbelag noch auf einer ausreichenden Länge an der Zylinderwand geführt ist. Bremsbelagbaugruppen der beschriebenen Gattung ermöglichen wegen der geringen erforderlichen Baulänge des Kolbens eine raumsparende Gestaltung des Betätigungszylinders und somit auch der Bremse insgesamt. Die wärmeisolierende Umhüllung des Bremsbelages sorgt dafür, daß von der am Bremsbelag entstehenden Reibungswärme kein wesentlich größerer Anteil auf den Betätigungszylinder und die Bremsflüssigkeit übertragen wird als dies bei Anordnung des Bremsbelages außerhalb des Betätigungszylinders der Fall ist.

Bei einer aus der US-PS 2 801 714 bekannten Bremsbelag- baugruppe der beschriebenen Gattung erstreckt sich die wärmeisolierende Umhüllung über die Mantelfläche und die Rückseite des Bremsbelages. Der Betätigungskolben besteht aus einem Kunststoff, der demjenigen des Bremsbelages ähnlich ist und in einer vorzugsweise aus Aluminium gegessenen Schale geformt und erstarrt ist. In die Rückseite des Bremsbelages ist eine Paßfeder aus Stahl eingebettet, die mit Preßsitz in eine entsprechende Nut an der Vorderseite des Betätigungskolbens eingreift. Dadadurch wird verhindert, daß der Bremsbelag sich gegenüber dem Kolben dreht, und es wird auch dafür gesorgt, daß der Bremsbelag beim Lösen der Bremse an Rückzugsbewegungen des Kolbens teilnimmt. Eine vollständig feste Verbindung zwischen Bremsbelag und Kolben läßt sich jedoch auf diese Weise nicht erzielen und kann bei der bekannten Konstruktion auch nicht wünschenswert sein, da die Paßfederverbindung imstande sein muß, Achsfluchtungsfehler zwischen dem Bremsbelag und dem Betätigungskolben auszugleichen. Der Bremsbelag dieser beskannten Bremsbelagbaugruppe darf nur teilweise abgenutzt werden, da eine unmittelbare Berührung der Paßfeder mit der Bremsscheibe vermieden werden sollte. Ehe die Abnutzung des Bremsbelages soweit fortgeschritten ist, daß die Paßfeder freigelegt wird, besteht jedoch schon die Gefahr, daß Teile des Bremsbelages ausbröckeln und sich zwischen dem Betätigungszylinder und der Bremsscheibe verklemmen. Die Paßfeder wirkt außerdem als Wärmebrücke und trägt vor allem bei weit fortgeschrittenem Belagverschleiß erheblich dazu bei, daß die Bremsflüssigkeit erhitzt wird, wobei bekanntermaßen die Gefahr besteht, daß in älterer Bremsflüssigkeit enthaltenes Wasser verdampft und Blasen bildet, die zum Ausfall der Bremsanlage führen können.

Der Erfindung liegt deshalb die Aufgabe zugrunde, eine Bremsbelagbaugruppe der eingangs beschriebenen Gattung derart weiterzubilden, daß der Bremsbelag bis zu seiner vollständigen Abnutzung sicher mit dem Betätigungskolben verbunden bleibt und ein ausreichender Schutz der Bremsflüssigkeit vor Überhitzung auch bei vollständig abgenutztem Bremsbelag erhalten bleibt.

Die Aufgabe ist erfindungsgemäß dadurch gelöst, daß die wärmeisolierende Umhüllung auch den Betätigungskolben mindestens an dessen Mantelfläche dicht umschließt und ihn mit dem Bremsbelag zu einer starren Einheit verbindet.

Damit wird erreicht, daß der Bremsbelag auch in weit- gehend abgenutztem Zustand noch fest mit dem Kolben verbunden bleibt und nicht dazu neigt, auszubröckeln. Eine Paßfeder oder ein ähnliches, das nutzbare Volumen des Bremsbelages verminderndes Verbindungsmittel ist nicht erforderlich. Durch die wärmeisolierende Umhüllung des Kolbens bleibt eine ausreichende Wärmeisolierung gegenüber dem Betätigungszylinder, und somit auch gegenüber der Bremsflüssigkeit, auch dann noch erhalten, wenn der Bremsbelag weitgehend abgenutzt ist. Etwaige Achsfluchtungsfehler zwischen dem Kolben und dem Bremsbeslag sind unschädlich, da sie von der gemeinsamen Umhüllung ausgeglichen werden. Wegen dieser Umhüllung können Bremsbelag und Kolben als solche mit geringer Genauigkeit hergestellt werden; für eine einwandfreie Führung im Betätigungszylinder genügt eine entsprechend genaue Herstellung oder Bearbeitung der wärmeisolierenden Umhüllung.

Bei einer bevorzugten Ausführungsform der Erfindung ist der Betätigungskolben ein starres becherförmiges Bauteil, das einen an die Rückseite des Bremsbelages angrenzenden und durch die wärmeisolierende Umhüllung abgedichteten Hohlraum umschließt. Der Hohlraum verbessert die Wärmeisolierung zwischen dem Bremsbelag und der Rückseite des Kolbens. Sollte der Kolben oder dessen Umhüllung nicht vollständig gegen die Zylinderwand abdichten, so würde die Umhüllung dennoch verhindern, daß Bremsflüssigkeit in den Hohlraum des Kolbens gelangt. Es ist also praktisch ausgeschlossen, daß der Hohlraum sich mit Bremsflüssigkeit füllt und dadurch seine warmeisolierende Wirkung verliert, und ebenso ist es ausgeschlossen, daß Bremsflüssigkeit in Poren des Bremsbelages eindringt und dessen Reibwert verschlechtert.

Es ist ferner zweckmäßig, wenn der Bremsbelag an seiner Rückseite einen Bund aufweist, mit dem er am Betätigungskolben zentriert ist.

Die wärmeisolierende Umhüllung umschließt den Betäti- gungskolben vorzugsweise derart, daß sie auch dessen Rückseite dicht abdeckt Dadurch wird die Bremsflüssigkeit noch besser gegen Überhitzung geschützt.

Das Erfindungsmerkmal, daß die wärmeisolierende Umhül- lung zusätzlich zu dem Bremsbelag auch den Betätigungskolben umschließt, kann dadurch weitergebildet werden, daß diese Umhüllung an der Rückseite des Betätigungskolbens eine ringförmige, an der Zylinderwand anliegende Dichtlippe bildet. Wenn eine solche Dichtlippe vorhanden ist, kann im allgemeinen darauf verzichtet werden, in den Betätigungskolben eine Ringdichtung einzubetten, wie dies gemäß der US-PS 2 801 714 der Fall ist.

Die wärmeisolierende Umhüllung kann ein vorgefertigtes, schlauch- oder becherförmiges Bauteil aus bei Erhitzung schrumpfendem Kunststoff sein, das auf den Bremsbelag und den Betätigungskolben aufgeschrumpft ist. Die Umhüllung kann aber auch durch Spritzgießen oder auf andere Weise derart angebracht werden, daß sie den Bremsbelag mit dem Betätigungskolben dicht, vorzugsweise mit einer gewissen Umfangsspannung, umschließt und dadurch beide zu einer starren Einheit verbindet.

Die wärmeisolierende Umhüllung besteht vorzugsweise aus kohlefaserverstärktem Kunststoff, der eine hohe Zugfestigkeit, Wärmebeständigkeit und gute Gleiteigenschaften aufweist.

Der Bremsbelag kann wegen der durch die Erfindung er- zielten guten Wärmedämmung aus einem Werkstoff bestehen, der selbst ein schlechter Wärmeisolator ist, beispielsweise aus Sintermetall oder aus organischem Werkstoff mit erheblichem Metallanteil. Die erfindungsgemäße, den Bremsbelag und den Betätigungskolben umschließende Umhüllung wirkt auch schwingungsdämpfend, vor allem gegenüber hochfrequenten Schwingungen. Deshalb können für den Bremsbelag auch solche Werkstoffe verwendet werden, die unter Umständen zur Erzeugung von Schwingungen neigen, beispielsweise keramische Werkstoffe. Auch Bremsbeläge aus Glas-, Kunststoff- oder Kohlefaserwerkstoffen lassen sich durch die erfindungsgemäße Umhüllung zuverlässig mit dem Betätigungskolben verbinden.

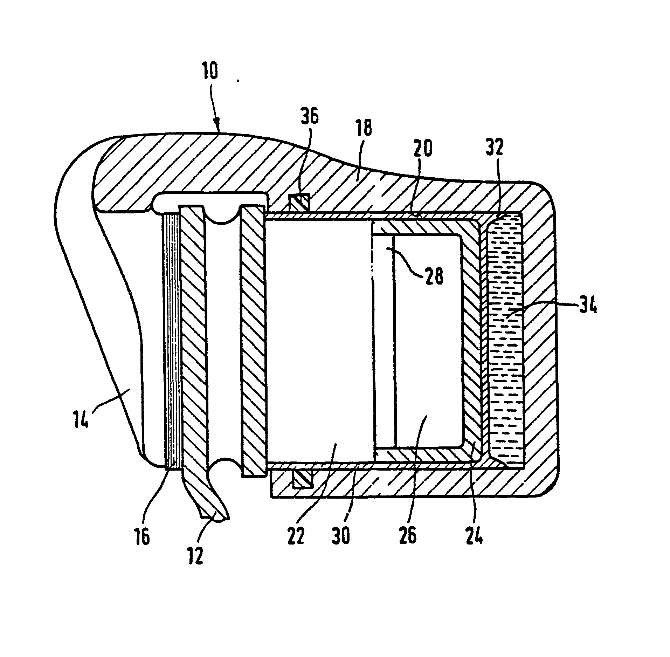

Ein Ausführungsbeispiel der Erfindung wird im folgenden anhand einer schematischen Zeichnung mit weiteren Einzelheiten erläutert. Die Zeichnung zeigt in einem axialen Schnitt einen Schwimmsattel einer Scheibenbremse und einen Teil der zugehörigen Bremsscheibe.

Der dargestellte Schwimmsattel 10 umgreift den äußeren Rand der Bremsscheibe 12 und weist auf deren vom zugehörigen Fahrzeug abgewandten Außenseite einen gabelförmigen Schenkel 14 auf, der sich radial, in Richtung zur Achse der Bremsscheibe 12 erstreckt und an seiner Innenseite einen plattenförmigen Bremsbelag 16 von beispielsweise trapezförmigem Umriß trägt.

An dem in bezug auf das Fahrzeug inneren.Teil des Schwimmsattels 10 ist ein Betätigungszylinder 18 mit glatter Zylinderwand 20 ausgebildet. Der Betätigungszylinder 18 enthält in seinem der Bremsscheibe 12 zugewandten Bereich einen kolbenartigen Bremsbelag 22 und einen an dessen Rückseite angeordneten Betätigungskolben 24. Der Betätigungskolben 24 ist ein becherförmiges Tiefziehteil aus Stahl mit einem dem Bremsbelag 22 zugewandten Hohlraum 26. Der Bremsbelag 22 hat an seiner Rückseite einen Bund 28, der in den Hohlraum 26 eingreift und dadurch den Bremsbelag in bezug auf den Betätigungskolben zentriert, ohne den Hohlraum mehr als zu einem kleinen Teil auszufüllen.

Bremsbelag 22 und Betätigungskolben 24 haben einen Außendurchmesser, der merklich, beispielsweise um 2 mm, kleiner ist als der Innendurchmesser der Zylinderwand 20. Der dadurch gebildete Zwischenraum ist von einer Umhüllung 30 ausgefüllt, die den Bremsbelag 22 und den Betätigungskolben 24 an deren Mantelfläche dicht umschließt und dadurch beide zu einer starren Einheit miteinander verbindet. Die Umhüllung 30 umschließt den Betätigungskolben 24 auch an dessen Rückseite und bildet am Übergang zwischen der Mantelfläche und der Rückseite des Betätigungskolbens eine ringförmige Dichtlippe 32, die abdichtend an der Zylinderwand 20 anliegt und dadurch im hinteren, von der Bremsscheibe 12 abgewandten Endbereich des Betätigungszylinders 18 eine Zylinderkammer 34 begrenzt.

In den vorderen Bereich der Zylinderwand 20 kann ein Schubring 36 eingebettet sein, der sich bei jeder Bremsbetätigung etwas verformt und nach der Bremsbetätigung dafür sorgt, daß Bremsbelag 22 und Betätigungskolben 24 um eine kleine Strecke von der Bremsscheibe 12 weg zurückgestellt werden. Insoweit ist der Schubring 36 von üblicher Konstruktion und Funktion; im Gegensatz zu üblichen Anordnungen, bei denen der Schubring unmittelbar am Betätigungskolben anliegt, umschließt der Schubring 36 hier die Umhüllung 30 und übt auf diese bei jeder Bremsbetätigung eine Rückstellkraft aus. Die Umhüllung 30 haftet genügend fest am Bremsbelag 22 und am Betätigungskolben 24, um auf diese die Rückstellkraft des Schubrings 36 zu übertragen.

Die Umhüllung 30 nutzt sich während der gesamten Nut- zungsdauer des kolbenartigen Bremsbelages 22 in gleichem Maß ab wie dieser; der übrigbleibende Rest dieses Bremsbelages, so dünn er auch werden mag, bleibt an seiner Mantelfläche von der Umhüllung 30 fest umschlossen und dadurch starr mit dem Betätigungskolben 24 verbunden. Wenn der Bremsbelag 22 verschlissen ist, wird ar zusammen mit dem Betätigungskolben 24 erneuert, wobei Gelegenheit besteht, die Zylinderwand 20 auf Verschleiß zu prüfen und wobei die Bremsflüssigkeit vorzugsweise nicht nur in der Zylinderkammer 34, sondern insgesamt ausgewechselt wird, da nach der normalen Lebensdauer des Bremsbelages 22 angenommen werden muß, daß der Wassergehalt der Bremsflüssigkeit die Grenze des ncch Zulässigen zumindest annähernd erreicht hat.

# 0 096 361

**Patentansprüche:**

1. Bremsbelagbaugruppe, insbesondere für Scheiben- bremsen, mit
- einem kolbenartigen Bremsbelag (22),
- einer wärmeisolierenden Umhüllung (30), die an einer Mantelfläche des Bremsbelages (22) anliegt und sie im Einbauzustand von einer Zylinderwand (20) eines Betätigungszylinders (18) trennt,
- und einem Betätigungskolben (24), der an der Rückseite des Bremsbelages (22) anliegt,
dadurch gekennzeichnet,
daß die wärmeisolierende Umhüllung (30) auch den Betäti- gungskolben (24) mindestens an dessen Mantelfläche dicht umschließt und ihn mit dem Bremsbelag (22) zu einer starren Einheit verbindet.

2. Bremsbelagbaugruppe nach Anspruch 1,
dadurch gekennzeichnet,
daß der Betätigungskolben (24) ein starres becherförmi- ges Bauteil ist, das einen an die Rückseite des Bremsbelages (22) angrenzenden und durch die wärmeisolierende Umhüllung (30) abgedichteten Hohlraum (26) umschließt.

3. Bremsbelagbaugruppe nach Anspruch 2,
dadurch gekennzeichnet,
daß der Bremsbelag (22) an seiner Rückseite einen Bund (28) aufweist, mit dem er am Betätigungskolben (24) zentriert ist.

4. Bremsbelagbaugruppe nach einem der Ansprüche 1 bis 3,
dadurch gekennzeichnet,
daß die wärmeisolierende Umhüllung (30) auch die Rück- seite des Betätigungskolbens (24) dicht abdeckt.

5. Bremsbelagbaugruppe nach einem der Ansprüche 1 bis 4,
dadurch gekennzeichnet,
daß die wärmeisolierende Umhüllung (30) an der Rückseite des Betätigungskolbens (24) eine ringförmige, an der Zylinderwand (20) anliegende Dichtlippe (32) bildet.

6. Bremsbelagbaugruppe nach einem der Ansprüche 1 bis 5,
dadurch gekennzeichnet,
daß die wärmeisolierende Umhüllung (30) ein vorgefertig- tes, schlauch- oder becherförmiges Bauteil aus bei Erhitzung schrumpfendem Kunststoff ist, das auf den Bremsbelag (22) und den Betätigungskolben (24) aufgeschrumpft ist.

7. Bremsbelagbaugruppe nach einem der Ansprüche 1 bis 6,
dadurch gekennzeichnet,
daß die wärmeisolierende Umhüllung (30) aus kohlefaser- verstärktem Kunststoff besteht.

**Claims**

1. Brake pad assembly, especially for disk brakes, comprising
- a piston-shaped brake pad (22)
- a heat-insulating cover (30) resting against a peripheral surface of the brake pad (22) and separating the latter, in installed condition, from a cylinder wall (20) of an actuating cylinder (18),
- and an actuating piston (24) resting against the rear side of the brake bad (22),
characterized in
that the heat-insulating cover (30) sealingly surrounds also the actuating piston (24) at least at the peripheral surface thereof and connects said piston with the brake pad (22) to form a rigid unit.

2. The brake pad assembly as definded in claim 1
characterized in that the actuating piston (24) is a rigid cup-shaped element surrounding a hollow space (26) adjoining the rear side of the brake pad (22) and being sealed by the heat-insulating cover (30).

3. The brake pad assembly as defined in claim 2
characterized in that the brake pad (22) has a collar (28) at its rear side with which said pad is centered on the actuating piston (24).

4. The brake pad assembly as defined in any one of claims 1 to 3
characterized in that the heat-insulating cover (30) sealingly covers also the rear side of the actuating piston (24).

5. The brake pad assembly as defined in any one of claims 1 to 4
characterized in that the heat-insulating cover (30) forms an annular sealing lip (32) at the rear side of the actuating piston (24) that rests against the cylinder wall (20).

6. The brake pad assembly as defined in any one of claims 1 to 5
characterized in that the heat-insulating cover (30) is a prefabricated tubular or cup-shaped element of heat shrinkable plastic material shrunk onto the brake pad (22) and the actuating piston (24).

7. The brake pad assembly as defined in any one of claims 1 to 6
characterized in that the heat-insulating cover (30) is made of a carbon fiber reinforced plastic material.

4

**Revendications**

1. Ensemble de garniture de frein, en parti- culier pour freins à disque, comportant:
- une garniture de frein 22 en forme de piston;
- une enveloppe calorifuge 30, qui est appliquée contre la surface latérale limite de la garniture de frein 22 et qui la sépare, une fois montée, de la paroi cylindrique 20 d'un cylindre d'actionnement 18;
- et un piston d'actionnement 24 qui est appliqué contre le côté arrière de la garniture de frein 22, caractérisé en ce que l'enveloppe calorifuge 30 entoure hermétiquement également le piston d'actionnement 24 au moins à sa surface latérale limite et le relie à la garniture de frein 22 pour former une unité rigide.

2. Ensemble de garniture de frein selon la revendication 1, caractérisé en ce que le piston d'actionnement 24 est une pièce rigide en forme de coupe qui enferme un espace creux 26 contigu à la face arrière de la garniture de frein 22 et fermé de façon étanche par l'enveloppe calorifuge 30.

3. Ensemble de garniture de frein selon la revendication 2, caractérisé en ce que la garniture de frein 22 comporte, à sa face arrière, un collet 28 grâce auquel elle est centrée sur le piston d'actionnement 24.

4. Ensemble de garniture de frein selon 1,une des revendications 1 à 3, caractérisé en ce que l'enveloppe calorifuge 30 recouvre également de façon étanche la face arrière du piston d'actionnement 24.

5. Ensemble de garniture de frein selon 1,une des revendications 1 à 4, caractérisé en ce que l'enveloppe calorifuge 30 forme, du côté arrière du piston d'actionnement 24, une lèvre d'étanchéité annulaire 32 s'appliquant contre la paroi cylindrique 20.

6. Ensemble de garniture de frein selon l'une des revendications 1 à 5, caractérisé en ce que l'enveloppe calorifuge 30 est une pièce préfabriquée en forme de tuyau ou de coupe en matière synthétique se rétractant par échauffement, qui est serrée sur la garniture de frein 22 et le piston d'actionnement 24.

7. Ensemble de garniture de frein selon l'une des revendications 1 à 6, caractérisé en ce que l'enveloppe calorifuge 30 est en une matière plastique renforcée par des fibres de carbone.